Europäisches Patentamt

European Patent Office

Office européen des brevets

(19)

(11) **EP 0 735 702 B1**

(12) **FASCICULE DE BREVET EUROPEEN**

(45) Date de publication et mention
de la délivrance du brevet:
**17.10.2001 Bulletin 2001/42**

(51) Int Cl.7: **H04B 7/08**

(21) Numéro de dépôt: **96400617.5**

(22) Date de dépôt: **22.03.1996**

(54) **Procédé et dispositif de réception multicapteur d'une station de base fixe pour un système de communication mobile**

Verfahren und Vorrichtung zum Diversity-Empfang einer Basisstation in einem Mobilkommunikationssystem

Method and apparatus for base station diversity reception in a mobile communications system

(84) Etats contractants désignés:
**DE FI FR GB IT NL SE**

(30) Priorité: **28.03.1995 FR 9503626**

(43) Date de publication de la demande:
**02.10.1996 Bulletin 1996/40**

(73) Titulaire: **THOMSON CSF**
**75008 Paris (FR)**

(72) Inventeurs:
• **Monot, Jean-Jacques**
**92402 Courbevoie Cedex (FR)**
• **Pipon, François**
**92402 Courbevoie Cedex (FR)**

• **Multedo, Gilbert**
**92402 Courbevoie Cedex (FR)**
• **Chevalier, Pascal**
**92402 Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**EP-A- 0 449 327          EP-A- 0 639 897**
**US-A- 5 255 210**

## Description

La présente invention concerne un procédé et un dispositif pour sa mise en oeuvre, permettant d'améliorer la réception de messages transmis sur un support radioélectrique entre au moins un utilisateur mobile et une station de base fixe d'un réseau de communication.

L'invention s'applique au domaine des radiocommunications, notamment à la transmission de données numériques entre au moins un terminal mobile et un serveur fixe.

Le service MOBIPAC exploité par France Télécom Mobiles Data, permet une telle transmission. MOBIPAC est un service de transmission de données avec les mobiles, utilisant un support radioélectrique. Il permet un dialogue bidirectionnel, sous la forme d'échanges de paquets de données soit entre un terminal mobile et un serveur fixe, quel que soit l'initiateur du transfert, soit entre deux terminaux mobiles. On appelle terminal mobile un terminal relié au réseau par voie radioélectrique, sans préjuger de ses besoins en terme de mobilité, et on appelle terminal fixe un terminal relié au réseau par liaison filaire. L'accès au réseau par le mobile se fait à l'aide d'une station de base.

Le partage des ressources radioélectriques, qui repose sur un protocole d'accès multiple, permet de gérer en même temps un grand nombre de mobiles, qui bénéficient de ce fait d'un accès rapide au réseau.

Le réseau se compose de terminaux mobiles, de stations de base et d'une série de commutateurs de rattachement et de transit. Un centre de supervision assure les fonctions d'exploitation et de supervision des équipements du réseau,.ainsi que la gestion des données techniques des abonnés.

La liaison entre un terminal mobile et la station de base est bidirectionnelle et s'effectue à travers un canal. Le canal se compose d'une fréquence montante et d'une fréquence descendante, dans la bande 410-430 MHz. Les canaux sont espacés de 12,5 kHz.

La transmission s'effectue sous formes de trames permettant le transfert des paquets de données. La modulation utilisée est une modulation GMSK, abréviation anglo-saxonne pour "Gaussian Minimum Shift Keying", d'indice 0,3 véhiculant un débit brut de 8 kbits/s.

Au niveau physique, la trame est constituée d'un en-tête et de blocs de symboles, correspondant aux données codées. Chaque bloc comprend 30 octets provenant de 20 octets de la couche liaison, codés par un codage de Hamming. L'en-tête comprend 7 octets, dont trente-deux symboles de synchronisation : seize symboles de synchronisation bit (identiques pour tous les messages) et seize symboles de synchronisation trame (spécifiques de l'opérateur).

Le message minimal comprend un en-tête et un bloc, soit une taille minimale de message de 37 octets, soit 37 ms. Chaque transmission est précédée par un temps d'établissement et de stabilisation de la porteuse de 5 à 10 ms.

L'accès au réseau par le mobile s'effectue de deux manières :

- La première met en oeuvre un système d'accès aléatoire dans des tranches de temps définies par la station de base, appelées également "slots" en terminologie anglo-saxonne. Comme tous les mobiles effectuent leur accès sur la même fréquence, il est possible que deux, voire plusieurs mobiles essayent de transmettre un message dans le même intervalle de temps, d'où collision. La gestion des collisions est effectuée par la station de base qui renvoie un signal d'acquittement lorsque la transmission du message envoyé par le mobile a été réussie. Ce système d'accès aléatoire permet la transmission de paquets si leur taille est compatible de la durée du slot, sinon le mobile effectue une demande de transfert de plus longue durée. Le début du premier slot se situe 40 ms après la réception de la trame autorisant l'accès TDMA, abréviation anglo-saxonne pour "Time Division Multiple Access". Un temps de garde de 3,1 ms est prévu pour la détermination par les mobiles des débuts de slots. La durée actuelle des slots est de 68 ms pour des messages d'une durée de 37 ms.
- La deuxième met en oeuvre un système d'accès consécutif à une demande de transmission de paquets de taille importante par le mobile. Dans ce cas, la station émet une trame spécifique déclenchant l'émission par le mobile d'un paquet correspondant à la taille transmise dans la demande d'accès au réseau. Le mobile dispose de 20 ms pour effectuer le retournement d'alternat et envoyer son message autorisé par la trame spécifique.

Les transmissions entre la station de base et le mobile utilisent un principe de correction automatique d'erreur. Ainsi le mobile ou la station peuvent demander un signal d'acquittement à l'envoi d'un message afin de gérer les collisions ou la perte de messages à cause des conditions de propagation. Dans le cas où l'émetteur ne reçoit pas ce signal d'acquittement, il effectue un nouvel essai. Les performances de cette transmission sont toutefois limitées pour les faibles puissances d'émission des mobiles et par le nombre important des collisions rencontrées sur un même "slot".

La demande de brevet EP 0 639 837 A1 divulgue un dispositif de réception multivoies permettant de lutter contre les effets de collision dans un système de communication à accès aléatoires, S-ALOHA. Le dispositif met en oeuvre un filtre spatial mobile correspondant à une estimée de Wiener pour chaque station mobile émettrice. Il y a nécessité pour les stations mobiles d'émettre périodiquement des « tracking paquets » pour la remise à jour de l'estimation.

Dans la demande de brevet EP 0 449 372 A2, le système de réception divulgué utilise des séquences d'apprentissage pour déterminer les estimées respectives des réponses des canaux de communication. L'estimation est dépendante de la forme d'onde.

L'invention a pour but de pallier les inconvénients précités.

A cet effet, l'invention concerne un procédé permettant d'améliorer la réception multicapteur d'un système de radiocommunication échangeant des signaux entre au moins un mobile et au moins une station de base fixe assurant une réception multicapteur par l'intermédiaire d'un réseau de capteurs et le traitement des signaux, en calculant un vecteur de pondération W de formation de voies à la réception d'une manière transparente vue de la station de base, où les vecteurs de pondération W sont les vecteurs propres correspondant à la valeur propre maximale de la matrice de corrélation (Rxx) du signal reçu par le réseau de capteurs.

Le procédé est caractérisé en ce qu'il comporte au moins les étapes suivantes :

- Acquérir le vecteur (X(n)) correspondant au signal reçu par le réseau de capteurs, après échantillonnage à une fréquence déterminée,
- Estimer le vecteur de pondération (W) selon un algorithme du gradient rendu adaptatif par la mise à jour, à chaque nouvel échantillon du pas ($\mu$) de calcul du gradient, le pas ($\mu$) étant déterminé pour limiter les pertes en fonction du rapport signal à bruit,
- Normaliser le vecteur (W) estimé pour garantir un module égal à 1 selon le critère de maximisation, et
- Filtrer les données du signal reçu par le réseau de capteurs à l'aide du vecteur de pondération estimé (W).

Elle concerne aussi un procédé permettant d'améliorer la réception multicapteur d'un système de radiocommunication échangeant des signaux entre au moins un mobile et au moins une station de base fixe assurant une réception multicapteur par l'intermédiaire d'un réseau de capteurs et le traitement des signaux, en calculant un vecteur de pondération W de formation de voies à la réception d'une manière transparente vue de la station de base.

Le procédé est caractérisé en ce qu'il comporte au moins les étapes suivantes :

- Choisir au moins deux capteurs du réseau,
- Acquérir le vecteur (X(n)) correspondant au signal reçu par le réseau de capteurs, après échantillonnage à une fréquence déterminée,
- Calculer les vecteurs d'intercorrélation du signal (X(n)) reçu par le réseau de capteurs et le signal reçu respectivement pour les deux capteurs de référence, le calcul étant mis à jour à chaque nouvel échantillon,
- Calculer les puissances du signal utile reçu respectivement pour les deux capteurs de référence, le calcul étant mis à jour à chaque nouvel échantillon,
- Sélectionner parmi les deux capteurs de référence celui qui possède la puissance la plus forte avec un écart supérieur à un seuil déterminé,
- Calculer le vecteur de pondération (W(n)) en effectuant le rapport entre le vecteur d'intercorrélation correspondant au capteur sélectionné et la puissance du signal reçu par ce capteur, et
- Filtrer les données du signal reçu par le réseau de capteurs à l'aide du vecteur de pondération estimé (W).

Le procédé selon l'invention a pour avantage d'être transparent vis à vis de la station de base et permet :

- principalement, l'amélioration de la réception des terminaux de faible puissance ou disposant d'un bilan de liaison défavorable, et
- en second plan, la limitation des collisions lors de l'accès par un ou plusieurs mobiles d'un même "slot".

D'autres caractéristiques et avantages de l'invention apparaîtront plus clairement à la lecture de la description qui suit faite en regard des figures annexées qui représentent :

- la figure 1, un schéma de principe d'une réception multicapteurs selon l'invention,
- les figures 2 et 3, le temps de convergence de l'algorithme VPM respectivement pour $\nu = 0{,}2$ et $\nu = 0{,}5$ pour différentes valeurs du rapport $\frac{Eb}{No}$ en entrée,
- la figure 4, une comparaison du temps de convergence de l'algorithme VPM pour les valeurs $\nu = 0{,}2$ et $\nu = 0{,}5$ pour le rapport $\frac{Eb}{No} = 0$ dB,
- la figure 5, le temps de convergence de l'algorithme FVA pour différentes valeurs du rapport $\frac{Eb}{No}$,
- la figure 6, les courbes donnant les variations du TEB en fonction du rapport $\frac{Eb}{No}$ d'entrée pour la méthode VPM avec $\nu = 0{,}2$ et pour une méthode monovoie, dans le cas monotrajet stationnaire,
- la figure 7, les courbes donnant les variations du TEB en fonction du rapport $\frac{Eb}{No}$ d'entrée pour la méthode VPM avec $\nu = 0{,}2$ et pour une méthode monovoie, dans le cas monotrajet de Rayleigh et bitrajet de Rayleigh,
- la figure 8, les courbes donnant les variations du TEB en fonction du rapport $\frac{Eb}{No}$ d'entrée pour la méthode FVA (BT = 3) et pour une méthode monovoie, dans le cas monotrajet stationnaire,

- la figure 9, les courbes donnant les variations du TEB en fonction du rapport $\frac{Eb}{No}$ d'entrée pour la méthode FVA (BT = 3) et pour une méthode monovoie, dans les cas monotrajet de Rayleigh et bitrajet de Rayleigh,
- la figure 10, un tableau donnant les valeurs du rapport $\frac{E1}{E2}$ en sortie des traitements VPM et FVA, pour différentes valeurs du rapport $\frac{E1}{E2}$ en entrée, où E1 et E2 sont les puissances de deux émissions arrivant simultanément sur le réseau (sur une phase d'accès), et
- la figure 11, un schéma fonctionnel d'un dispositif de réception multicapteur pour la mise en oeuvre du procédé selon l'invention.

L'invention consiste à "focaliser" la réception vers le signal le plus fort du canal de transmission, ce qui permet d'améliorer le réception des signaux de faible puissance. Comme il sera présenté à propos des performances, ce mode de fonctionnement permet également d'améliorer de manière sensible la réception pour deux signaux transmis dans le même canal.

En effet, le principe utilisé permet une amélioration du rapport signal à bruit (SNR, ou signal à bruit+brouilleur SNIR en présence d'une deuxième communication) de la communication la plus forte dans le canal.

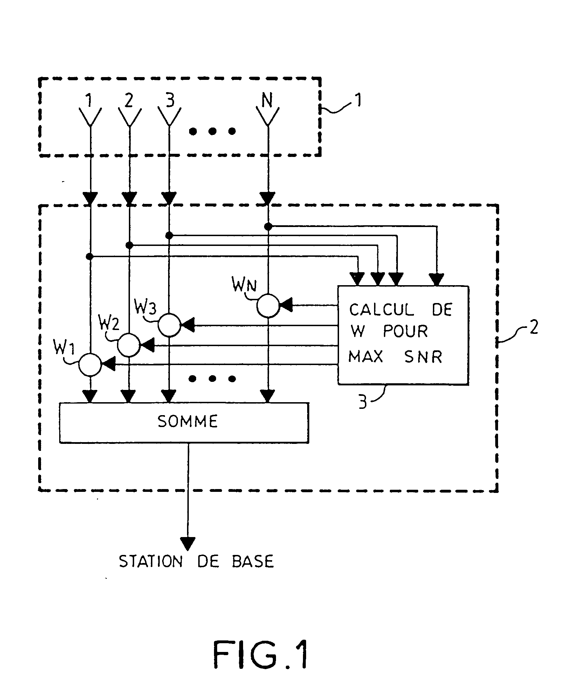

Le procédé selon l'invention, illustré schématiquement à la figure 1, est basé sur une réception multicapteur d'un signal émis par un mobile, comportant un réseau de N antennes omnidirectionnelles 1, couplé à une formation de voies 2.

Le résultat de la réception est ensuite transmis à la station de base fixe.

Le traitement de réception multicapteur est effectué en permanence sans prendre en compte la phase de fonctionnement de la station de base, en mode d'accès ou de trafic.

Le principe de traitement est décrit ci-après.

On suppose dans un premier temps que la liaison n'est pas brouillée. Le signal reçu par le réseau de capteurs peut donc s'écrire :

$$X(t) = \alpha . s(t) . S + B(t)$$

où s(t) est le signal émis par le mobile

$\alpha$ est l'amplitude sur un capteur déterminé choisi comme capteur de référence par exemple la capteur 1.
S est le vecteur directeur du signal émis par le mobile,
B (t) est le bruit.

Le vecteur directeur S défini par rapport au capteur de référence s'exprime de la façon suivante :

$$S = \begin{bmatrix} 1 \\ a_2 . e^{j\varphi_2} \\ a_3 . e^{j\varphi_3} \\ ... \\ a_N . e^{j\varphi_N} \end{bmatrix} \qquad (1)$$

où $a_k$ est la différence de gain entre le capteur k et le capteur 1 (due essentiellement aux problèmes de couplage entre capteurs) et $\varphi_k$ est la phase différentielle entre le capteur k et le capteur 1. $a_k$ et $\varphi_k$ dépendent de la direction d'arrivée du signal utile.

Après l'acquisition d'un vecteur X(n) correspondant au signal reçu X(t) par le réseau de capteurs 1 après échantillonnage à une fréquence déterminée, par exemple de Fe = 16 Khz, le procédé selon l'invention calcule le vecteur de pondération W des voies de réception qui conduit à une maximisation du SNR en sortie du traitement. Le SNR s'exprime par la formule suivante, en supposant que le niveau de bruit est identique sur chaque capteur k = 1 à K :

$$SNR = \frac{\Pi_s \cdot |W^+ \cdot S|^2}{\sigma^2 W^+ W} \tag{2}$$

où $\Pi_s$ définit la puissance du signal utile reçu sur le capteur de référence et, $\sigma^2$ la puissance du bruit superposé au signal utile, et + en exposant, l'opération de transposition-conjugaison.

La solution de ce problème est $W = \lambda . S$ ($\lambda$ complexe)

Deux méthodes peuvent être utilisées pour calculer le vecteur W :

- Une première méthode estime le vecteur propre associé à la valeur propre maximale de la matrice de corrélation $R_{XX}$ du signal X(t) reçu sur le réseau de capteurs,
- Une deuxième méthode calcule la corrélation entre le signal reçu $x_1$ sur un capteur de référence et les signaux reçus par les autres capteurs.

La première méthode, dénommée dans la suite de la description par les initiales VPM pour Vecteur Propre Maximal, part du principe que le vecteur W recherché est le vecteur propre correspondant à la valeur propre maximale de la matrice de corrélation des signaux reçus sur le réseau de capteurs $R_{xx}$. Ce principe est démontré en calculant la matrice de corrélation des signaux reçus sur le réseau de capteurs :

$$R_{xx} = E[X(t). X^+(t)] = \Pi_s SS^+ + \sigma^2.| \tag{3}$$

où $E[X(t). X^+(t)]$ définit l'espérance mathématique.

En effectuant une décomposition en vecteurs propres et valeurs propres de cette matrice, on obtient une valeur propre égale à $\Pi_s$, de vecteur propre S, et K-1 valeur propres égales à $\sigma^2$.

Le vecteur de pondération W est donc solution du problème suivant:

$$\begin{cases} \max P = W^+ R_{xx} W \\ W^+ W = 1 \end{cases} \tag{4}$$

où P est un critère correspondant à la puissance du signal en sortie de l'antenne définie par W, et $W^+W = 1$ est la contrainte de maximisation.

Pour estimer le vecteur W de façon adaptative, le procédé selon l'invention utilise un algorithme du gradient en partant de la condition initiale suivante :

$$W(0) = C = \begin{bmatrix} 1 \\ 0 \\ ... \\ 0 \end{bmatrix} \tag{5}$$

l'algorithme VPM est alors défini comme suit :

$$\begin{cases} \tilde{W}(n) = W(n-1) + \mu . \nabla P_{W(n-1)} \\ \nabla P_{W(n-1)} = R_{xx} . W(n-1) \end{cases} \tag{6}$$

où $\nabla P_{W(n-1)}$ correspond au gradient de la puissance P pris à W(n-1).

Le pas $\mu$ du calcul du gradient est un paramètre important : plus il est grand, plus la convergence est rapide, mais plus les erreurs de convergence sont importantes. Un compromis doit être trouvé. On rend adaptatif le paramètre, afin de limiter les pertes, en fonction du rapport signal à bruit. On choisit donc :

$$\mu = \frac{\nu}{X^+(n).X(n)}$$

Enfin, pour respecter la contrainte $W^+ W = 1$ (module=1), une normalisation est effectuée sur $W(n)$ :

$$W(n) = \frac{\tilde{W}(n)}{\|\tilde{W}(n)\|} \tag{7}$$

$R_{XX}$ n'étant pas connu a priori, on remplace $R_{XX}$ par une estimée instantanée :

$$R_{xx} \approx X(n).X^+(n) \tag{8}$$

L'algorithme VPM devient alors :

$$W(0) = C \tag{9}$$

$$\tilde{W}(n) = W(n-1) + \mu . X(n) X^+(n) . W(n-1) \tag{10}$$

$$W(n) = \frac{\tilde{W}(n)}{\|\tilde{W}(n)\|} \tag{11}$$

La deuxième méthode dénommée dans la suite de la description par les initiales FVA pour algorithme de Formation de Voies en Aveugle, consiste à calculer le vecteur d'intercorrélation $r_{Xx_1}$ entre le signal X reçu par les capteurs et le signal $x_1$ reçu sur le capteur de référence, puis à normaliser par la puissance reçue sur le premier capteur pour obtenir le vecteur W. Le vecteur W s'exprime donc par la formule suivante :

$$W = \frac{r_{Xx_1}}{E|x_1(t)|^2} = \frac{E\left[X(t).x_1^*(t)\right]}{E|x_1(t)|^2} = \frac{E\left[\left[\alpha . s(t).S + B(t)\right].\left[\alpha.s^*(t) + b_1^*(t)\right]\right]}{E|x_1(t)|^2}$$

$$= \frac{\Pi_S.S + \sigma^2.\begin{bmatrix} 1 \\ 0 \\ ... \\ 0 \end{bmatrix}}{\Pi_S + \sigma^2} \tag{12}$$

Lorsque la puissance de signal $\Pi_S$ est suffisamment forte par rapport à la puissance de bruit $\sigma^2$, le vecteur W est proportionnel au vecteur S et permet donc d'effectuer une formation de voie conventionnelle dans la direction du signal utile. Autrement dit, le vecteur W conduit à la maximisation du rapport signal à bruit en sortie de traitement.

Le calcul du vecteur W a été effectué ci-dessus en supposant connues les statistiques des signaux. Dans la pratique, ces statistiques sont inconnues. Dans cette méthode, le vecteur W est estimé par un algorithme adaptatif, utilisant un facteur d'oubli λ de manière à poursuivre toutes les non-stationnarités (non-stationnarité du canal de propagation, ou arrivée d'un nouveau mobile). A chaque nouvel échantillon, le vecteur W utilisé s'exprime de la manière suivante :

$$W(n) = \frac{\sum_{i=1}^{n} \lambda^{n-i} \cdot X(i) \cdot x_1^*(i)}{\sum_{i=1}^{n} \lambda^{n-i} \cdot \left\| x_1^*(i) \right\|^2} = \frac{r_{Xx_1}(n)}{\Pi_1(n)} \qquad (13)$$

où * en exposant correspond à l'opérateur de conjugaison complexe.

D'autre part, le capteur de référence, le capteur 1 dans les formules précédentes, pouvant être affecté d'un "fading" momentané, la méthode utilise deux capteurs de référence par exemple le capteur 1 et le capteur 2, dont le choix est fait après évaluation de la puissance de signal reçue. A chaque nouvel échantillon, la méthode effectue le séquencement suivant :

- calcul des puissances de signaux reçus sur les capteurs 1 et 2 : $\Pi_1(n)$ et $\Pi_2(n)$,
- calcul et mise à jour des corrélations de référence $r_{Xx1}(n)$ et $r_{Xx2}(n)$,
- sélection du capteur ayant la puissance la plus importante et calcul du vecteur de pondération :

$$W(n) = \frac{r_{Xxk}(n)}{P_k(n)}$$

- filtrage à l'aide du vecteur W précédent :

$$y(n) = W(n)^+ X(n) \qquad (15)$$

Afin d'éviter un changement de capteur de référence trop fréquent, un tel changement ne s'effectue que si la différence de puissance est supérieure à un seuil déterminé (par exemple 10 dB) :

$$abs(\Pi_1 - \Pi_2) \rangle 10 \text{ dB} \qquad (16)$$

Deux types de remarques se dégagent pour ces deux méthodes :

Pour effectuer l'une des deux méthodes, il n'est pas nécessaire d'avoir un modèle du front d'onde. En particulier, il n'est pas nécessaire de calibrer le réseau de capteurs (une telle calibration serait nécessaire si on voulait, à partir de l'estimation du vecteur S, estimer la direction d'arrivée du signal émis par le mobile, ce qui n'est pas le cas de l'invention).

Dans le cas où le signal utile X(t) comporte plusieurs trajets de propagation, les deux méthodes précédentes sont encore valables. En effet, le signal X(t) reçu par les capteurs s'exprime de la façon suivante :

$$X(t) = \sum_{i=1}^{P} \alpha_i \cdot s(t - \tau_i) \cdot S_i + B(t) \qquad (17)$$

où P est le nombre de trajets et $\tau_i$ le temps de retard de propagation du trajet i.

Tous les trajets arrivent sur le réseau de capteurs avec un temps de retard très inférieur à la durée symbole qui est généralement de 125 ms. On peut donc écrire :

$$s\,(t-\tau_i) = s(t),\ \forall i \tag{18}$$

et on obtient :

$$X\,(t) = s\,(t).[\Sigma\alpha_i.S_i] + B\,(t) \tag{19}$$

soit :

$$X\,(t) = \alpha'.s\,(t).S' + B\,(t)$$

S' est un vecteur directeur composite faisant intervenir l'ensemble des trajets associés au signal utile, qui peut être estimé en calculant le vecteur W par l'une des deux méthodes.

Une comparaison des deux méthodes est faite ci-après en termes de puissance de calcul et de performance.

En terme de puissance de calcul, la méthode VPM est plus coûteuse que la méthode FVA, car elle comprend à chaque itération un calcul d'inverse et un calcul d'inverse de norme.

En performances, les deux méthodes sont équivalentes sur des canaux monotrajet stationnaires ou de Rayleigh. Par contre, la méthode VPM est supérieure sur un canal comportant deux trajets de Rayleigh : elle tient compte de l'ensemble des capteurs pour estimer le vecteur S et n'est pas pénalisé par un "fading" sur l'un des capteurs qui pourrait être celui de référence pour la méthode FVA.

Ce phénomène pourrait être également présent si un couplage important apparaît entre les capteurs.

En conclusion, la méthode VPM est préférable si la puissance de calcul le permet.

Les performances des deux méthodes, obtenues à partir d'un exemple de simulation non limitatif, sont données ci-après.

Le modèle utilisé pour effectuer les simulations correspond à un modèle classiquement utilisé dans les systèmes de radiotéléphonie mobiles.

Le signal X (t) reçu par le système est supposé être constitué d'une émission comportant un ou deux trajets et d'un bruit blanc gaussien. Ce signal s'exprime par :

$$X\,(t) = \alpha_1(t).s(t).S_1 + \alpha_2\,(t).s\,(t).S_2 + B\,(t) \tag{20}$$

où :

$\alpha\,(t)$ représente la variation du canal qui est constant pour un canal stationnaire ou variable pour un "fading" de Rayleigh

$s(t)$, le signal modulant émis par le mobile ($\alpha_2\,(t) = 0$ pour un canal monotrajet),

$S_1$ et $S_2$, les vecteurs directeurs respectifs aux deux trajets de propagation, et

$B\,(t)$, le bruit reçu par la station.

S représente le vecteur directeur, sans prendre en compte pour le moment le couplage entre les capteurs et s'exprime comme suit :

$$S = \begin{bmatrix} 1 \\ e^{j\,\varphi_1} \\ \dots \\ e^{j\,\varphi_k} \end{bmatrix} \tag{21}$$

Les simulations ont été effectuées pour les deux méthodes (FVA et VPM) dans les mêmes conditions, afin de comparer leur performances. Deux valeurs ont été testées pour le paramètre v du gradient selon la méthode VPM :

0,2 et 0,5, pour les vitesses de convergence. La valeur 0,2 a été retenue comme valeur optimale pour cet exemple.

Le facteur d'oubli λ de l'algorithme de la méthode FVA est pris égal à 11/12 = 0,917.

Dans l'exemple d'un système fonctionnant par trames, dont la taille minimale est de 37 ms, avec émission d'une porteuse non modulée pendant 5 à 10 ms avant les données, la formation de voies atteint un gain optimal en moins de 1 ms après le début de l'émission de la porteuse, comme le présentent les simulations suivantes.

On remarque également que ce temps de positionnement varie avec le rapport signal à bruit.

Dans le cas de la méthode VPM, la rapidité de convergence de l'algorithme dépend de la valeur utilisée pour la constante ν dans l'algorithme du gradient.

Les trois figures suivantes 2, 3 et 4 sont relatives au temps de convergence de l'algorithme selon la méthode VPM. Elles représentent les courbes donnant la valeur du gain sur différentes valeurs sur le rapport $\frac{Eb}{No}$ en sortie de traitement en fonction du temps de convergence.

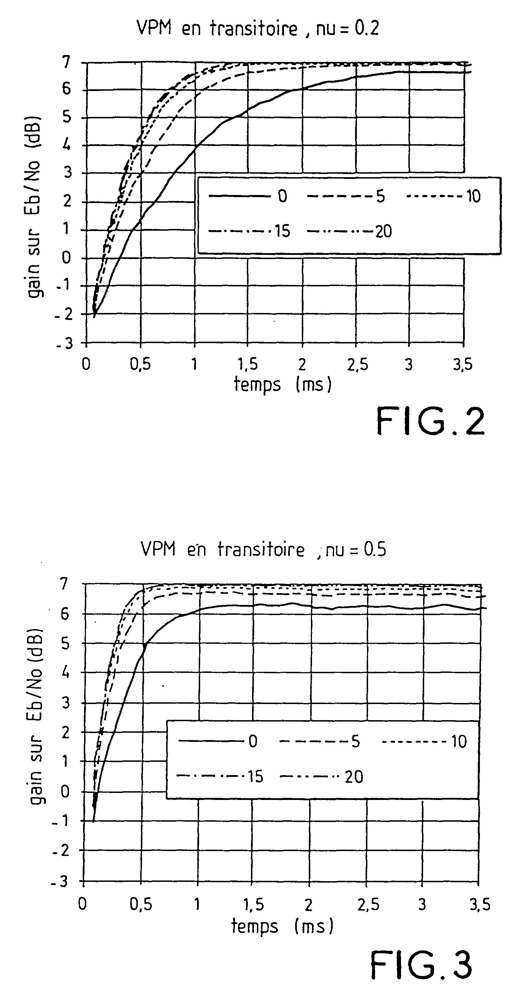

Les figures 2 et 3 présentent respectivement ces courbes pour ν = 0,2 et 0,5 et pour différentes valeurs du rapport $\frac{Eb}{No}$ en entrée. Le rapport $\frac{Eb}{No}$ correspond au rapport signal à bruit en sortie du filtre adapté. Eb correspond à l'énergie par bit transmis et No la densité spectrale de bruit.

Pour ν = 0,5 (respectivement ν = 0,2), la méthode VPM converge en 0,5 ms (respectivement 1 ms) lorsque le rapport $\frac{Eb}{No}$ d'entrée est supérieur à 5 dB. Le critère de convergence est à moins de 1 dB de la valeur obtenue en fin de convergence.

D'autre part, la gain maximum théorique est de 7 dB (10 logK = 7 pour K = 5 capteurs). Pour ν = 0,2, le gain une fois la convergence de l'algorithme établie (τ > 1,5 ms) est situé à moins de 0,5 dB de cette valeur maximale lorsque le rapport $\frac{Eb}{No}$ en entrée est supérieur à 5 dB.

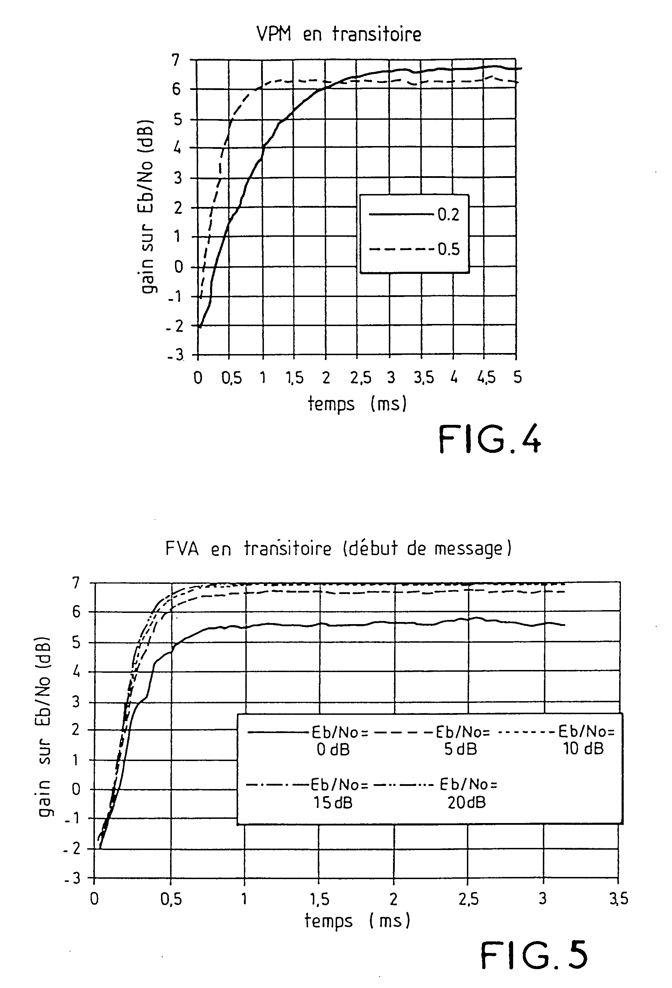

La figure 4 compare le temps de convergence de l'algorithme VPM pour les valeurs ν = 0,2 et 0,5, pour $\frac{Eb}{No}$ = 0 dB. On remarque la rapidité de convergence pour ν = 0,5, mais avec un gain et une stabilité plus faible par la suite.

La figure 5 illustre le temps de convergence de l'algorithme selon la méthode FVA.

Dans le cas de la méthode FVA, le gain d'antenne est au minimum de 6 dB dès 500 ms pour un $\frac{Eb}{No}$ en entrée de 5 dB, et l'algorithme converge en 750 ms dans le cas le plus défavorable ($\frac{Eb}{No}$ = 0 dB).

En conclusion, quelle que soit la méthode utilisée, le traitement est complètement transparent pour la station de base, et converge en moins de 1 ms.

Le mode de fonctionnement en formation de voies selon la méthode FVA présente des performances élevées en ce qui concerne l'amélioration de la réception. Un avantage est donné à la méthode VPM qui ne prend pas un capteur comme référence arbitraire pour le traitement.

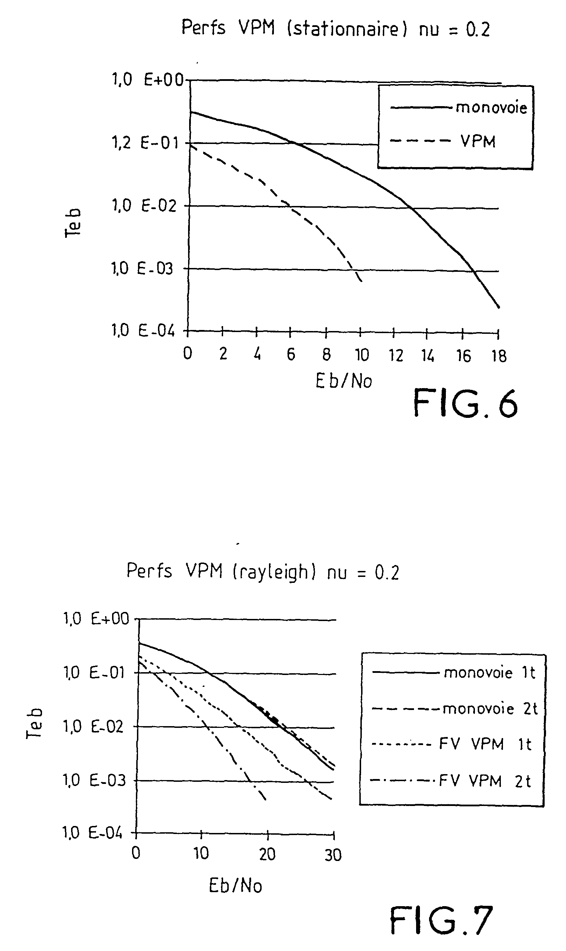

La figure 6 représente les courbes du TEB en fonction du rapport $\frac{Eb}{No}$ (TEB désigne le Taux d'Erreurs Binaires obtenu en sortie du système de traitement), pour la méthode VPM (avec ν = 0,2), et pour une méthode monovoie qui exploite directement le signal issu d'un capteur. Le canal utile est un canal monotrajet stationnaire. La méthode VPM permet un gain de 7 dB. Pour atteindre le point de fonctionnement à TEB = $10^{-2}$, le rapport $\frac{Eb}{No}$ doit valoir $\frac{Eb}{No}$ = 6 dB. Pour une telle valeur du rapport $\frac{Eb}{No}$, une méthode monovoie conduit à un TEB dix fois plus important.

Même en présence de multitrajets, ce mode de fonctionnement permet un gain appréciable par rapport à la configuration monocapteur : dans une configuration monotrajet de Rayleigh, le gain pour un TEB égal à $10^{-2}$ est de 6,5 dB, alors qu'il est de 10 dB dans une configuration considérant deux trajets de Rayleigh de même puissance. Ces performances sont illustrées à la figure 7.

Comme les résultats précédents le démontrent, la configuration multitrajet permet à une réception multicapteur mettant en oeuvre la méthode VPM, d'effectuer une diversité sur ses capteurs et par la suite d'améliorer la performance de manière encore plus importante. Cette diversité est due à la recombinaison des trajets : à un instant donné, le niveau de signal reçu par chacun des capteurs est différent et la méthode

VPM permet de tenir compte de façon préférentielle des capteurs sur lesquels le niveau reçu est le plus fort.

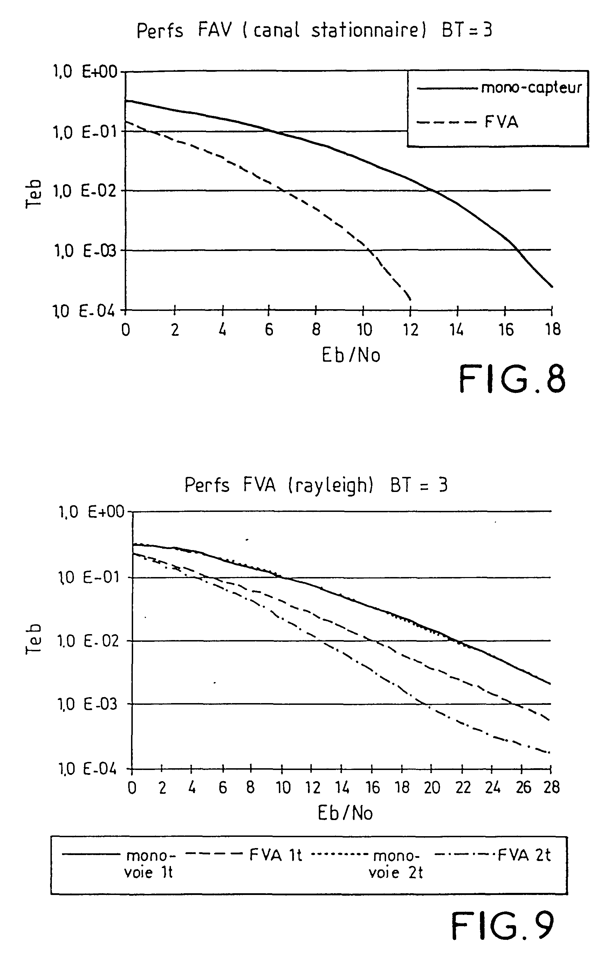

De la même manière que pour la méthode VPM, pour une configuration avec cinq capteurs, le gain en $\frac{Eb}{No}$ est de 7 dB avec la méthode FVA. Les performances de la méthode FVA dans cette configuration sont illustrées à la figure 8.

Sur la figure 9, illustrant les performances de la méthode FVA dans la même configuration, comparées aux méthodes monovoie en présence de multitrajets, on remarque pour la méthode FVA une résistance légèrement moins bonne que la méthode VPM à une configuration multitrajets, due à la présence de "fading" sur le capteur de référence (performances comparables pour les valeurs de TEB supérieures à $10^{-3}$ et moins bonnes pour celles inférieures à $10^{-3}$).

Une réception multicapteur selon l'invention améliore la séparation de deux communications accédant dans la même slot. Ceci est démontré dans la suite de la description pour la méthode FVA.

D'autre part, des simulations effectuées pour les deux méthodes démontrent leur efficacité à traiter ce problème.

La méthode FVA permet d'améliorer le rapport signal/bruit du signal le plus fort. En supposant que le réseau reçoive deux émissions (1 et 2), le signal reçu par le réseau de capteurs s'exprime par la formule suivante :

$$X(t) = \alpha_1.s_1(t).S_1 + \alpha_2.s_2(t).S_1 + B(t) \tag{22}$$

Asymptotiquement, le vecteur W tend vers la valeur suivante :

$$W = \frac{E\left|X(t).x_1^*(t)\right|}{E\left|x_1^*(t)\right|^2} = \frac{\Pi_1.S_1 + \Pi_2.S_2 + \sigma^2.\begin{bmatrix} 1 \\ 0 \\ \cdots \\ 0 \end{bmatrix}}{\Pi_1 + \Pi_2 + \sigma^2} \tag{23}$$

Le vecteur W ainsi calculé est donc, lorsque les puissances $\Pi_1$ et $\Pi_2$ relatives respectivement aux puissances des signaux $s_1$ et $s_2$ sont des puissances suffisamment fortes par rapport à la puissance du bruit $\sigma^2$, la somme d'une formation de voie dans la direction du signal $s_1$ et d'une formation de voie dans la direction du signal $s_2$. Cette somme est pondérée par les puissances respectives de deux émissions : le lobe formé dans la direction du signal le plus fort est d'autant plus grand que la puissance du signal est forte.

Un calcul plus précis du rapport $\frac{P_1}{P_2}$ entre les puissances de sortie du signal $s_1$ et $s_2$ est donné ci-après :

$$\frac{P_1}{P_2} = \frac{\Pi_1.\left|W^+.S_1\right|^2}{\Pi_2.\left|W^+.S_2\right|^2} = \frac{\Pi_1.\left|\Pi_1.S_1^+.S_1 + \Pi_2.S_2^+.S_1 + \sigma^2\right|^2}{\Pi_2.\left|\Pi_1.S_1^+.S_2 + \Pi_2.S_2^+.S_2 + \sigma^2\right|^2} \tag{24}$$

Soit $\rho$ le coefficient de corrélation spatiale entre le signal $s_1$ et le signal $s_2$:

$$\rho = \frac{S_1^+.S_2}{\sqrt{(S_1^+.S_1).(S_2^+.S_2)}} \tag{25}$$

On suppose de plus que tous les capteurs reçoivent la même puissance de signal :

$$S_1^+.S_1 = S_2^+.S_2 \tag{26}$$

$$\frac{P_1}{P_2} = \frac{\Pi_1.\left|\Pi_1 + \rho.\Pi_2 + \sigma^2\right|^2}{\Pi_2.\left|\Pi_2 + \rho^*.\Pi_1 + \sigma^2\right|^2} \tag{27}$$

Lorsque les deux signaux sont parfaitement décorrélés spatialement ($\rho=0$), on obtient :

$$\frac{P_1}{P_2} = \frac{\Pi_1}{\Pi_2}.\left(\frac{\Pi_1}{\Pi_2}\right)^2 \tag{28}$$

Ainsi, le rapport entre les puissances d'entrée des deux signaux est amplifié. Par exemple, si $\frac{\Pi_1}{\Pi_2}$ = 10 dB en entrée (démodulation impossible du signal 1), on obtient $\frac{P_1}{P_2}$ = 30 dB en sortie de traitement (démodulation parfaite).

Lorsque les deux signaux sont parfaitement corrélés ($\rho=1$), on obtient :

$$\frac{P_1}{P_2} = \frac{\Pi_1}{\Pi_2}$$

et le rapport entre les puissances des deux signaux n'est pas modifié.

La démonstration dans ce cas de la méthode VPM est plus complexe, les simulations démontrent également son bon fonctionnement, et même sa supériorité par rapport à la FVA.

Ainsi, dans le cas où deux mobiles communiquent dans le même canal, ce qui correspond à une situation de collision dans la phase d'accès, le procédé selon l'invention effectue une "capture" du signal le plus fort. Il augmente le niveau relatif des deux signaux en privilégiant le plus fort. Suivant la méthode utilisée, le gain varie avec un avantage non négligeable pour la méthode VPM.

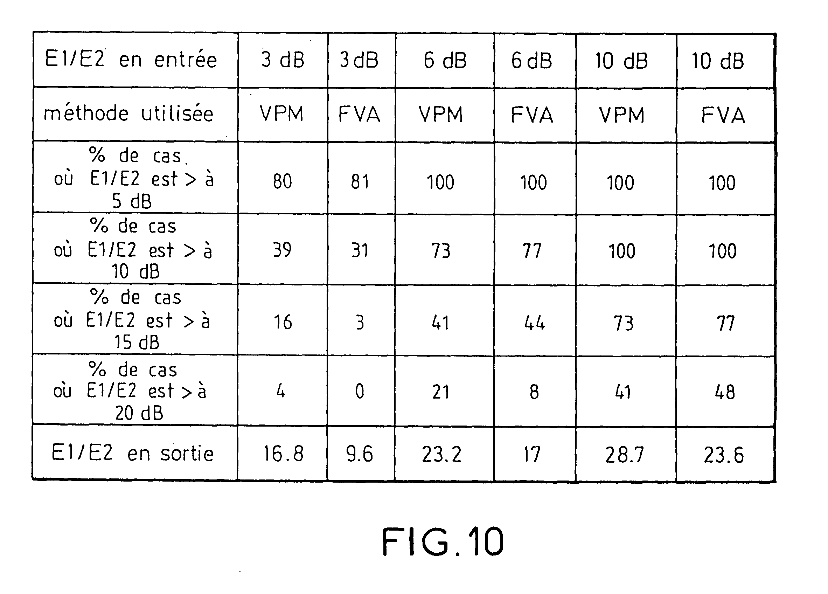

Le tableau de la figure 10 présente les résultats d'une simulation effectuée dans le cas où deux mobiles 1 et 2 arrivent sur le réseau sur le même canal de fréquences. Les deux mobiles 1 et 2 ont des puissances d'émission respectives $E_1$ et $E_2$, et la simulation fait varier les azimuts des mobiles 1 et 2 entre 0 et 360°, ainsi que la valeur du rapport $\frac{E_1}{E_2}$ en entrée de traitement (0 dB, 3dB, 6 dB et 10 dB). Le tableau donne les niveaux moyens pour le rapport $\frac{E_1}{E_2}$ en sortie des traitements VPM et FVA, ainsi que le pourcentage de cas où la rapport $\frac{E_1}{E_2}$ de sortie est supérieur à une valeur donnée. Par exemple, si le rapport $\frac{E_1}{E_2}$ en entrée vaut 6 dB, un traitement monovoie ne pourra démoduler aucune des deux émissions. Par contre, avec le traitement VPM (respectivement FVA) dans 41% des cas (respectivement 44%), le rapport $\frac{E_1}{E_2}$ sera supérieur à 15 dB et le traitement monovoie placé en sortie du système multivoie pourra démoduler l'émission la plus faible.

En conséquence, le procédé peut être utilisé même pour les phases d'accès, car il permet une démodulation du signal le plus fort, quand les deux mobiles sont séparés spatialement de manière adéquate.

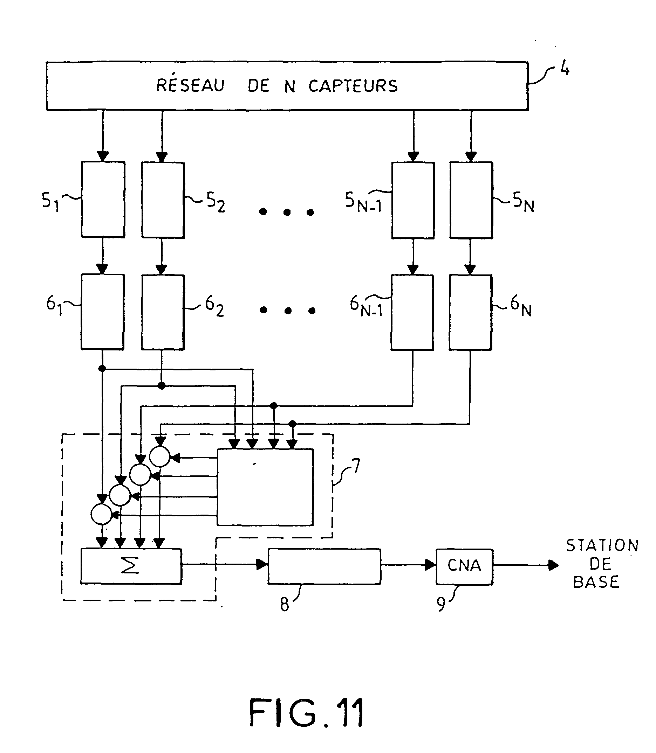

Un schéma fonctionnel d'un dispositif de réception multicapteur pour la mise en oeuvre du procédé selon l'invention est illustré à la figure 11.

Le dispositif de réception multicapteur selon l'invention comporte

- un réseau de capteurs 4 comportant, par exemple, un nombre N d'antennes omnidirectionnelles,
- des moyens $5_1$ à $5_N$ de réception analogique d'un nombre N déterminé de voies correspondant au nombre N de capteurs du réseau 4. Les moyens de réception analogique permettent la sélection du canal de communication et la transposition du signal reçu dans une bande déterminée vers une fréquence intermédiaire $F_i$ compatible d'un échantillonnage. Une fonction de contrôle automatique de gain (CAG) peut y être implantée afin de disposer d'une dynamique de réception et d'améliorer la sensibilité.
- des moyens $6_1$ à $6_N$ de numérisation et de passage en bande de base respectifs à chacune des voies. Les moyens de numérisation et de passage en bande de base $6_1$ à $6_N$ permettent d'échantillonner le signal sur un nombre de bits compatible de la dynamique du signal et de transposer ce signal vers la bande de base afin de fournir à la formation de voies 2 un signal complexe.
- un processeur 7 de formation de voies numériques, délimité par une ligne fermée discontinue à l'intérieur de laquelle se retrouve le bloc diagramme 2 de la figure 1, mettant en oeuvre l'un ou l'autre des algorithmes précédemment décrits. Le processeur 7 de formation de voies fournit le signal de sortie sur une voie à partir des N signaux reçus.
- un moyen 8 de discrimination de fréquence numérique effectuant la démodulation. Le moyen de discrimination de fréquence 8 effectue une démodulation de fréquence afin de disposer d'un signal dont la valeur correspond aux données modulées, et
- un convertisseur numérique analogique 9. Le CNA 9 (convertisseur analogique numérique) transforme le signal numérique en un signal analogique compatible de l'interface d'entrée du démodulateur de la station de base non représentée.

**Revendications**

1. Procédé permettant d'améliorer la réception multicapteur d'un système de radiocommunication échangeant des signaux entre au moins un mobile et au moins une station de base fixe assurant une réception multicapteur (2) par l'intermédiaire d'un réseau de capteurs et le traitement des signaux, en calculant (3) un vecteur de pondération (W) de formation de voies à la réception d'une manière transparente vue de la station de base, **caractérisé en ce que** les vecteurs de pondération (W) sont les vecteurs propres correspondant à la valeur propre maximale de la matrice de corrélation (Rxx) du signal reçu par le réseau de capteurs (1), et **en ce qu'**il comporte au moins les étapes suivantes :

- Acquérir le vecteur (X(n)) correspondant au signal reçu par le réseau de capteurs (1), après échantillonnage à une fréquence déterminée,
- Estimer le vecteur de pondération (W) selon un algorithme du gradient rendu adaptatif par la mise à jour, à chaque nouvel échantillon, du pas ($\mu$) de calcul du gradient, le pas ($\mu$) étant déterminé pour limiter les pertes en fonction du rapport signal à bruit,
- Normaliser le vecteur (W) estimé pour garantir un module égal à 1 selon le critère de maximisation, et
- Filtrer les données du signal reçu par le réseau de capteurs à l'aide du vecteur de pondération estimé (W).

2. Procédé permettant d'améliorer la réception multicapteur d'un système de radiocommunication échangeant des signaux entre au moins un mobile et au moins une station de base fixe assurant une réception multicapteur (2) par l'intermédiaire d'un réseau de capteurs et le traitement des signaux, en calculant (3) un vecteur de pondération (W) de formation de voies à la réception d'une manière transparente vue de la station de base, **caractérisé en ce qu'**il comporte au moins les étapes suivantes :

- Choisir au moins deux capteurs du réseau (1),
- Acquérir le vecteur (X(n)) correspondant au signal reçu par le réseau de capteurs (1), après échantillonnage à une fréquence déterminée,
- Calculer les vecteurs d'intercorrélation du signal (X(n)) reçu par le réseau de capteurs (1) et le signal reçu respectivement par les deux capteurs de référence, le calcul étant mis à jour à chaque nouvel échantillon,
- Calculer les puissances du signal utile reçu respectivement pour les deux capteurs (1) de référence, le calcul étant mis à jour à chaque nouvel échantillon,
- Sélectionner parmi les deux capteurs de référence celui qui possède la puissance la plus forte avec un écart supérieur à un seuil déterminé,
- Calculer le vecteur de pondération (W(n)) en effectuant le rapport entre le vecteur d'intercorrélation correspondant au capteur sélectionné et la puissance du signal reçu par ce capteur, et
- Filtrer les données du signal reçu par le réseau de capteurs (1) à l'aide du vecteur de pondération estimé (W).

3. Dispositif de réception pour la mise en oeuvre du procédé selon l'une quelconque des revendications 1 et 2, comportant un réseau (4) d'un nombre (N) déterminé de capteurs, des moyens ($5_1$ à $5_N$) de réception multivoie en analogique permettant la sélection d'un canal de communication et la transposition du signal reçu dans une bande déternninée vers une fréquence intermédiaire compatible d'un échantillonnage déterminé, des moyens ($6_1$ à $6_N$) de numérisation et de passage en bande de base, **caractérisé en ce qu'**il comporte en outre des moyens (7) de formation de voies numériques mettant en oeuvre l'algorithme adaptatif conduisant à une maximisation du rapport signal à bruit, un moyen (8) de discrimination de fréquence effectuant une démodulation en fréquence afin de disposer d'un signal dont la valeur correspond aux données modulées, et un convertisseur (9) numérique/analogique transformant le signal numérique en un signal analogique compatible de l'interface d'entrée de la station de base à laquelle est relié le dispositif de réception, le dispositif de réception étant totalement transparent vis à vis de la station de base.

**Patentansprüche**

1. Verfahren zur Verbesserung des Mehrsondenempfangs in einem Funksystem, in dem Signale zwischen mindestens einem Mobilfunkgerät und mindestens einer festen Basisstation ausgetauscht werden, die einen Mehrsondenempfang (2) über ein Netz von Antennensonden sowie eine Verarbeitung der Signale durch Berechnung (3) eines Wichtungsvektors (W) der Kanalbildung beim Empfang auf transparente Art aus der Sicht der Basisstation gewährleistet, **dadurch gekennzeichnet, daß** die Wichtungsvektoren (W) die Eigenvektoren entsprechend dem maximalen Eigenwert der Korrelationsmatrix ($R_{xx}$) des vom Netz von Sonden (1) empfangenen Signals sind und daß das Verfahren mindestens die folgenden Schritte enthält:

- man erfaßt den Vektor (X(n)) entsprechend dem vom Netz von Sonden (1) empfangenen Signal nach Tastung mit einer bestimmten Frequenz;
- man schätzt den Wichtungsvektor (W) gemäß einem Gradientenalgorithmus, der durch Aktualisierung des Gradienten-Rechnungsschritts ($\mu$) mit jeder neuen Tastprobe angepaßt wird, wobei der Schritt ($\mu$) so bestimmt ist, daß die Verluste abhängig vom Signal/Rauschverhältnis begrenzt werden;
- man normiert den geschätzten Vektor (W), um einen Einheits-Modulwert gemäß dem Optimierungskriterium zu gewährleisten;
- man filtert die Daten des vom Netz von Sonden empfangenen Signals mithilfe des geschätzten Wichtungsvektors (W).

2. Verfahren zur Verbesserung des Mehrsondenempfangs in einem Funksystem, in dem Signale zwischen mindestens einem Mobilfunkgerät und mindestens einer festen Basisstation ausgetauscht werden, die einen Mehrsondenempfang (2) über ein Netz von Antennensonden sowie eine Verarbeitung der Signale durch Berechnung (3) eines Wichtungsvektors (W) der Kanalbildung beim Empfang auf transparente Art aus der Sicht der Basisstation gewährleistet, **dadurch gekennzeichnet, daß** es die folgenden Verfahrensschritte aufweist:

- man wählt mindestens zwei Sonden des Netzes (1) aus;
- man erfaßt den Vektor (X(n)) entsprechend dem von dem Netz von Sonden (1) empfangenen Signal nach Tastung mit einer bestimmten Frequenz;
- man berechnet die Interkorrelationsvektoren des von dem Netz von Sonden (1) empfangenen Signals (X(n)) und des von jeder der beiden Bezugssonden empfangenen Signals, wobei diese Berechnung bei jeder neuen Tastprobe aktualisiert wird;
- man berechnet die Leistungen des für die beiden Bezugssonden (1) empfangenen Nutzsignals, wobei die Berechnung für jede neue Tastprobe aktualisiert wird;
- man wählt unter den beiden Bezugssonden diejenige aus, die unter Berücksichtigung eines Mindestabstands gemäß einer bestimmten Schwelle die höhere Leistung besitzt;
- man berechnet den Wichtungsvektor (W(n)), indem man das Verhältnis zwischen dem Interkorrelationsvektor entsprechend der ausgewählten Sonde und der Leistung des von dieser Sonde empfangenen Signals bildet;
- man filtert die Daten des von dem Netz von Sonden (1) empfangenen Signals mithilfe des geschätzten Wichtungsvektors (W).

3. Vorrichtung zum Empfang gemäß dem Verfahren nach einem beliebigen der Ansprüche 1 und 2, mit einem Netz (4) einer bestimmten Anzahl (N) von Antennensonden, mit Mitteln ($5_1$ bis $5_N$) zum analogen Mehrkanalempfang, die die Auswahl eines Kanals und die Umsetzung des in einem bestimmten Frequenzband empfangenen Signals auf eine Zwischenfrequenz bewirken, die sich für eine bestimmte Tastung eignet, mit Mitteln ($6_1$ bis $6_N$) zur Digitalisierung und zum Übergang auf das Basisband, **dadurch gekennzeichnet, daß** sie außerdem Mittel (7) zur Bildung von digitalen Kanälen, die den adaptiven Algorithmus anwenden, der zu einer Optimierung des Signal/Rauschverhältnisses führt, ein Mittel (8) zur Frequenzdiskriminierung, das eine Frequenzdemodulation durchführt, um über ein Signal zu verfügen, dessen Wert den modulierten Daten entspricht, und einen Digital/Analogwandler (9) aufweist, der das digitale Signal in ein analoges Signal umwandelt, das mit der Schnittstelle am Eingang der Basisstation kompatibel ist, an die die Empfangsvorrichtung angeschlossen ist, wobei die Vorrichtung gegenüber der Basisstation vollkommen transparent ist.

**Claims**

1. Process making it possible to improve the multisensor reception of a radio communications system exchanging signals between at least one mobile and at least one fixed base station catering for multisensor reception (2) by way of a network of sensors and the processing of the signals, by computing (3) a weighting vector (W) for the formation of pathways on reception in a transparent manner as seen from the base station, **characterized in that** the weighting vectors (W) are the eigenvectors corresponding to the maximum eigenvalue of the correlation matrix (Rxx) of the signal received by the network of sensors (1), and **in that** it comprises at least the following steps:

- Acquiring the vector (X(n)) corresponding to the signal received by the network of sensors (1), after sampling at a specified frequency,
- Estimating the weighting vector (W) according to a gradient algorithm rendered adaptive by the updating, at each new sample, of the stepsize ($\mu$) for computing the gradient, the stepsize ($\mu$) being determined so as to limit the losses as a function of the signal-to-noise ratio,
- Normalizing the estimated vector (W) so as to guarantee a modulus equal to 1 according to the maximization criterion, and
- Filtering the data of the signal received by the network of sensors with the aid of the estimated weighting vector (W).

2. Process making it possible to improve the multisensor reception of a radio communications system exchanging signals between at least one mobile and at least one fixed base station catering for multisensor reception (2) by way of a network of sensors' and the processing of the signals, by computing (3) a weighting vector (W) for the formation of pathways on reception in a transparent manner as seen from the base station, **characterized in that** it comprises at least the following steps:

- Choosing at least two sensors of the network (1),
- Acquiring the vector (X(n)) corresponding to the signal received by the network of sensors (1), after sampling at a specified frequency,
- Computing the cross-correlation vectors of the signal (X(n)) received by the network of sensors (1) and the signal received respectively by the two reference sensors, the computation being updated at each new sample,
- Computing powers of the useful signal received respectively for the two reference sensors (1), the computation being updated at each new sample,
- Selecting from among the two reference sensors that which possesses the highest power with a discrepancy greater than a specified threshold,
- Computing the weighting vector (W(n)) by taking the ratio between the cross-correlation vector corresponding to the selected sensor and the power of the signal received by this sensor, and
- Filtering the data of the signal received by the network of sensors (1) with the aid of the estimated weighting vector (W).

3. Reception device for implementing the process according to either one of Claims 1 and 2, comprising a network (4) of a specified number (N) of sensors, means ($5_1$ to $5_N$) of analogue multipathway reception allowing the selection of a communication channel and the transposition of the signal received in a specified band to an intermediate frequency compatible with a specified sampling, means ($6_1$ to $6_N$) for digitization and for switching to baseband, **characterized in that** it furthermore comprises means (7) for forming digital pathways implementing the adaptive algorithm leading to a maximization of the signal-to-noise ratio, a frequency discriminating means (8) performing a frequency demodulation so as to furnish a signal whose value corresponds to the modulated data, and a digital/analogue converter (9) transforming the digital signal into an analogue signal compatible with the input interface of the base station to which the reception device is linked, the reception device being totally transparent with regard to the base station.

FIG.1

VPM en transitoire , nu = 0.2

FIG.2

VPM en transitoire , nu = 0.5

FIG.3

VPM en transitoire

FIG.4

FVA en transitoire (début de message)

FIG.5

Perfs VPM (stationnaire) nu = 0.2

FIG.6

Perfs VPM (rayleigh) nu = 0.2

FIG.7

18

Perfs FAV (canal stationnaire) BT = 3

FIG.8

Perfs FVA (rayleigh) BT = 3

FIG.9

| E1/E2 en entrée | 3 dB | 3 dB | 6 dB | 6 dB | 10 dB | 10 dB |
|---|---|---|---|---|---|---|
| méthode utilisée | VPM | FVA | VPM | FVA | VPM | FVA |
| % de cas où E1/E2 est > à 5 dB | 80 | 81 | 100 | 100 | 100 | 100 |
| % de cas où E1/E2 est > à 10 dB | 39 | 31 | 73 | 77 | 100 | 100 |
| % de cas où E1/E2 est > à 15 dB | 16 | 3 | 41 | 44 | 73 | 77 |
| % de cas où E1/E2 est > à 20 dB | 4 | 0 | 21 | 8 | 41 | 48 |
| E1/E2 en sortie | 16.8 | 9.6 | 23.2 | 17 | 28.7 | 23.6 |

## FIG.10

FIG.11